# EUROPÄISCHE PATENTSCHRIFT

(11) **EP 2 952 773 B1**
(45) Veröffentlichungstag und Bekanntmachung des Hinweises auf die Patenterteilung: **17.08.2016**
(21) Anmeldenummer: 15002166.5
(22) Anmeldetag: 14.05.2011
(51) Int. Cl.: F16F 9/00, E02F 9/22, F15B 1/02, F15B 21/14, B66C 13/28, B66F 9/22, E02F 3/42, F16F 9/02

(54) **VORRICHTUNG ZUR RÜCKGEWINNUNG VON ENERGIE**
DEVICE FOR THE RECOVERY OF ENERGY
DISPOSITIF DE RECUPERATION D'ENERGIE

(30) Priorität: 27.07.2010 DE 102010032415; 29.11.2010 US 926599
(43) Veröffentlichungstag der Anmeldung: 09.12.2015
(62) Teilanmeldung aus: 11721438.7
(73) Patentinhaber: HYDAC TECHNOLOGY GMBH, 66280 Sulzbach/Saar (DE)
(72) Erfinder: Baltes, Herbert, 66679 Losheim (DE); Bauer, Frank, 66646 Marpingen (DE); Kloft, Peter, 56235 Ransbach-Baumbach (DE); Feld, Daniel, 66271 Kleinblittersdorf (DE)
(74) Vertreter: Bartels & Partner

(56) Entgegenhaltungen:
- EP-A2- 1 614 814
- WO-A1-98/33989
- DE-A1- 4 341 660
- DE-A1- 10 006 013
- DE-A1-102006 035 766
- DE-A1-102008 018 451
- DE-U1-202005 003 621
- US-A1- 2004 103 656
- US-A1- 2008 314 467
- US-A1- 2009 236 906

## Beschreibung

Die Erfindung betrifft eine Vorrichtung zur Rückgewinnung von Energie bei Arbeitsmaschinen, mit mindestens einem Kraftantrieb, der zum Bewegen einer Lastmasse im Hingang und Hergang betätigbar ist, und mit einem Energiespeicher, der beim Bewegen der Lastmasse in der einen Richtung abgegebene Energie aufnimmt und für eine nachfolgenden Bewegung in der anderen Richtung zur Verfügung stellt, wobei ein Energiespeicher in Form eines Speicherzylinders vorgesehen ist, der, mit der Lastmasse mechanisch gekoppelt, bei Bewegung in der einen Richtung pneumatische Druckenergie speichert und bei Bewegung in der anderen Richtung als den Kraftantrieb unterstützender, die gespeicherte Druckenergie in Antriebskraft umsetzender Hilfs-Arbeitszylinder wirkt, und wobei die Kolbenstange des Speicherzylinders mit einem hohlen, endseitig offenen Teil den Kolben bildet.

Vorrichtungen dieser Art zur Rückgewinnung von Lageenergie bei Arbeitsmaschinen sind Stand der Technik, siehe beispielsweise WO 93/11363, WO 98/33989, oder EP 0 789 816 B1. Als Energiespeicher weisen derartige Vorrichtungen Druckspeicher auf, die abgegebene Lageenergie als Druckenergie eines Arbeitsgases speichern. Für den Nutzwert derartiger Vorrichtungen ist ausschlaggebend, dass im Betrieb möglichst geringe Energieverluste eintreten. Dabei handelt es sich in erster Linie um Verluste von Wärmeenergie des Speichergases. In der Regel wird ein Großteil der Wärmeenergie, die bei Kompression des Arbeitsgases entsteht, über die Außenwände der beim Stand der Technik als Energiespeicher benutzten Hydrospeicher abgegeben, wobei der großflächige Kontaktbereich zwischen Arbeitsgas und Umgebung bei der verhältnismäßig großen Oberfläche der in Frage kommenden Speichergehäuse (vornehmlich aus Stahl) zu beträchtlichen Wärmeverlusten führen kann.

Im Hinblick auf diese Problematik liegt der Erfindung die Aufgabe zugrunde, eine Vorrichtung der betrachteten Art zur Verfügung zu stellen, die sich bei besonders einfachem und kostensparendem Aufbau durch eine demgegenüber stark verbesserte Energiebilanz auszeichnet.

Erfindungsgemäß ist diese Aufgabe durch eine Vorrichtung gelöst, die die Merkmale des Patentanspruches 1 in seiner Gesamtheit aufweist.

Danach besteht eine wesentliche Besonderheit der Erfindung darin, dass der innere Hohlraum des Kolbens mit einem Schaummaterial gefüllt ist. Zur weiteren Verbesserung der dahingehenden Wärmeisolation, die die Energiebilanz verbessert, ist der innere Hohlraum des Kolbens mit einem großporigen Schaummaterial zur Gänze gefüllt, der partiell auch das Arbeitsgas aufnehmen kann.

Es ist ein Energiespeicher in Form eines Speicherzylinders vorgesehen, der, mit der Lastmasse mechanisch gekoppelt, bei Bewegung in der einen Richtung pneumatische Druckenergie speichert und bei Bewegung in der anderen Richtung als den Kraftantrieb unterstützender, die gespeicherte Druckenergie in Antriebskraft umsetzender Hilfs-Arbeitszylinder wirkt.

Bei einer besonders bevorzugten Ausführungsform ist vorgegeben, dass der Speicherzylinder als Hilfs-Arbeitszylinder mit einer anzuhebenden und abzusenkenden Lastmasse gekoppelt ist und bei Absenkvörgängen abgegebene Lageenergie in Form pneumatischer Druckenergie speichert Der Einsatz eines Energiespeichers in Form eines Speicherzylinders als Ersatz üblicherweise vorgesehener Hydrospeicher verbessert die Energiebilanz in mehr als einer Hinsicht. Zum einen hat die unmittelbare mechanische Koppelung des Speicherzylinders mit der Lastmasse, wodurch die gespeicherte Druckenergie unmittelbar in Hebekraft umsetzbar ist, so dass der Speicherzylinder als zusätzlicher Kraftantrieb wirkt, den Wegfall des Hydrauliksystemes zur Folge, wie es beim Stand der Technik zwischen Hydrospeicher und Kraftantrieb erforderlich ist, so dass die diesbezüglich ansonsten anfallenden Energieverluste in Wegfall kommen. Des Weiteren bietet ein Speicherzylinder im Vergleich zu einem Hydrospeicher wesentlich mehr konstruktive Möglichkeiten, den unmittelbaren Wärmeverlust des Arbeitsgases zu verringern.

Dieser unmittelbare Wärmeverlust ist ganz entscheidend dadurch verringert, dass die Kolbenstange des Speicherzylinders mit einem hohlen, endseitig offenen Teil den Kolben bildet. Der Hohlraum des Kolbens kann vorteilhaft in der in den Zylinder voll eingefahrenen Position im Wesentlichen das gesamte Volumen des Arbeitsgases enthalten. Bei dieser Bauweise des Kolbens geschieht die Wärmeentwicklung beim Absenken der Kolbenstange im Inneren des Kolbens, also in einem Bereich, der durch die Wandung des hohlen Kolbens von der Zylinderwandung isoliert ist. Da zudem der Kolben so bemessen ist, dass er in seinem Hohlraum im Wesentlichen das Gesamtvolumen des Arbeitsgases enthält, wenn der Kolben voll eingefahren ist, erstreckt sich bei diesem der stärksten Kompression und damit der stärksten Wärmeentwicklung entsprechenden Betriebszustand die Kolbenwandung über die gesamte Länge des Zylinders, so dass dieser beim Zustand der stärksten Wärmeentwicklung doppelwandig ist. Der Wärmeverlust ist somit minimiert.

Andererseits befindet sich bei dieser Bauweise aufgrund der gegebenen Baulänge des Kolbens dessen Wandung bei der voll ausgefahrenen Position mit einem entsprechenden Flächenanteil außerhalb der Zylinderwandung.

Bei dieser voll ausgefahrenen Position hat sich das Arbeitsgas entsprechend der Entspannung abgekühlt. Gleichzeitig hat bei dieser Kolbenposition die der Umgebung ausgesetzte Wandfläche, gebildet aus Zylinderfläche und freiliegender Mantelfläche des Kolbens, einen Größtwert. Dementsprechend ist der Wärmewiderstand der Gesamtwandfläche minimal, so dass relativ viel Wärmeenergie aus der Umgebungsluft aufgenommen und an das abgekühlte Arbeitsgas abgegeben wird. Es resultiert eine optimale Energiebilanz der Vorrichtung.

Zur Optimierung der Wärmeenergiebilanz trägt nicht nur die bereichsweise vorhandene Doppelwandanordnung mit bei, sondern vielmehr auch das in der Doppelwandung eingeschlossene Arbeits- oder Betriebmedium, beispielsweise in Form eines Arbeitsgases und/oder in Form von Hydrauliköl.

Der Speicherzylinder kann in Form eines Topfes gestaltet sein, an dessen geschlossenem Boden ein Füllanschluss für das Arbeitsgas, wie N₂, vorgesehen ist.

Bei besonders vorteilhaften Ausführungsbeispielen ist an dem dem Boden entgegengesetzten offenen Ende des Speicherzylinders eine Führung gebildet, die die Außenseite des Kolbens in einem einen Ölspalt bildenden Abstand von der Innenwand des Topfes führt.

Vorzugsweise ist am offenen Ende des Kolbens eine zweite Führung gebildet, die das Ende des Kolbens unter Beibehaltung des Ölspaltes führt. Dadurch lässt sich eine einwandfreie Kolbenführung verwirklichen.

Insbesondere lässt sich hierbei zusammen mit einer im Ölspalt befindlichen Ölfüllung ein Hochdruck-Dichtsystem bilden, das auch bei Anwendungen mit hohen Drücken, etwa mehr als 100 bar, im Langzeitbetrieb sicher arbeitet.

Um das beim Ausfahren des Kolbens und der dadurch bewirkten Verkleinerung der Länge des Ölspaltes verdrängte Öl aufzunehmen und beim Einfahren wieder bereitzustellen kann, mit dem Ölspalt ein Hydrospeicher in Verbindung stehen, der bei Bewegungen des Kolbens Änderungen des Volumens des Ölspaltes kompensiert.

Bei besonders vorteilhaften Ausführungsbeispielen dient der Speicherzylinder als Hilfs-Arbeitszylinder, der einem als Kraftantrieb dienenden, durch ein Hydrauliksystem betätigbaren hydraulischen Arbeitszylinder mechanisch nebengeschaltet ist. Dies ermöglicht eine besonders einfache Bauweise, insbesondere für Hebezeuge, Kranausleger und dergleichen, wo Hydraulikzylinder als unmittelbar an der Lastmasse angreifender Kraftantrieb vorgesehen sind.

Während beim Stand der Technik wieder gewonnene Energie in Form hydraulischer Druckenergie aus einem Hydrospeicher zur Verfügung steht, so dass wieder gewonnene Energie nur für hydraulische Kraftantriebe nutzbar ist, wie Arbeitszylinder oder Hydromotoren, ist die Erfindung in Verbindung mit beliebigen Kraftantrieben nutzbar, die nicht hydraulisch betätigbar zu sein brauchen, etwa bei zur Hebung von Lasten vorgesehenen elektromotorisch betätigten Spindeltrieben, Seilzügen oder dergleichen.

Nachstehend ist die Erfindung anhand von in der Zeichnung dargestellten Ausführungsbeispielen im Einzelnen erläutert. Es zeigen:
- Fig. 1: eine schematisch vereinfachte Darstellung eines Kranauslegers, versehen mit einem Ausführungsbeispiel der erfindungsgemäßen Vorrichtung zur Rückgewinnung von Lageenergie;
- Fig. 2: eine symbolhafte Darstellung, die zur Erläuterung des Funktionsprinzips der Erfindung einen Speicherzylinder in mechanischer Nebenschaltung zu einem Arbeitszylinder zeigt;
- Fig. 3: einen schematisch vereinfacht gezeichneten Längsschnitt eines Speicherzylinders eines ersten Ausführungsbeispieles;
- Fig. 4: einen der Fig. 3 entsprechenden Längsschnitt eines zweiten Ausführungsbeispieles; und
- Fig. 5 und 6: entsprechende Schnittdarstellungen eines dritten bzw. vierten Ausführungsbeispieles.

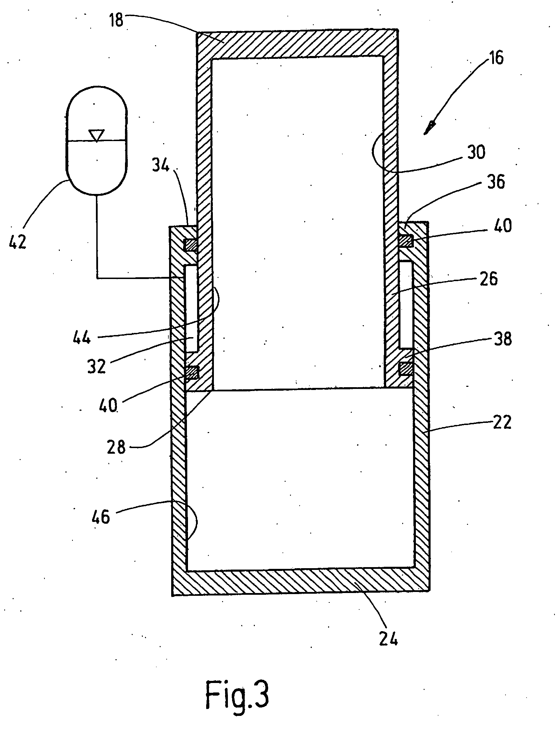

Die Ausführungsformen der Fig. 3 bis 5 dienen dabei lediglich der Erläuterung des Hintergrundes der Erfindung.

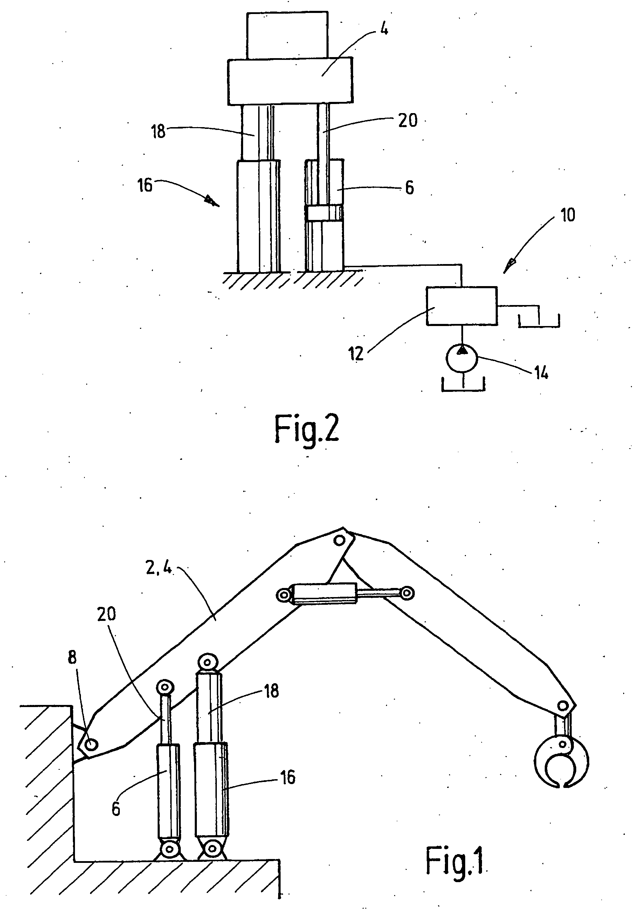

Nachstehend ist die Erfindung anhand von einem Ausführungsbeispiel erläutert, bei denen ein Kranausleger 2 eine Lastmasse 4 (Fig. 2) bildet. Der Ausleger 2 ist mittels eines Kraftantriebes in Form eines hydraulischen Arbeitszylinders 6 anhebbar, genauer gesagt, um eine Anlenkstelle 8 schwenkbar. Der Arbeitszylinder 6 ist ein Hydraulikzylinder, der durch ein in Fig. 2 lediglich symbolhaft angedeutetes Hydrauliksystem 10 betätigbar ist, von dem lediglich eine Steuerventilanordnung mit 12 und eine Hydropumpe mit 14 bezeichnet sind, siehe Fig. 2. Das Hydrauliksystem 10 kann im einzelnen in der bei Arbeitsmaschinen üblichen Art und Weise gestaltet sein, so dass hier nicht näher darauf eingegangen zu werden braucht.

Zu dem den Kraftantrieb bildenden Arbeitszylinder 6 ist ein Speicherzylinder 16 mechanisch nebengeschaltet, d.h. die Kolbenstange 18 des Speicherzylinders 16 greift, ebenso wie die Kolbenstange 20 des Arbeitszylinders 6 an der Lastmasse 4 (Ausleger 2) unmittelbar an.

Die Fig. 3 zeigt in gesonderter Darstellung nähere Einzelheiten des Speicherzylinders 16. Wie ersichtlich, hat dieser die Form eines Topfes 22 mit geschlossenem Boden 24, wobei sich an letzterem ein in der Fig. nicht dargestellter Füllanschluss für ein Arbeitsgas befindet, im vorliegenden Beispiel N₂. Beim gezeigten Beispiel bildet das Ende der Kolbenstange 18 den Kolben 26 in Form eines Hohlkörpers mit einem am Kolbenende 28 offenen, inneren Hohlraum 30, der bei der voll eingefahrenen Position des Kolbens 26, wenn sich das Kolbenende 28 am Boden 24 des Topfes 22 befindet, das gesamte Arbeitsgasvolumen enthält. Die Fig. 3 zeigt den Kolben 26 etwa in einer mittleren Position, in der sich das Gasvolumen aus dem vom Kolben 26 freien Innenraum des Topfes 22 und dem Hohlraum 30 des Kolbens 26 zusammensetzt.

Der Kolben 26 ist an der Innenwand des Topfes 22 des Speicherzylinders 16 so geführt, dass sich an der Außenseite des Kolbens 26 ein Ölspalt 32 befindet. Zu diesem Zweck ist am offenen Ende 34 des Topfes 22 eine Führung 36 für den Kolben 26 vorgesehen. Am offenen Kolbenende 28 befindet sich eine zweite Führung 38. Beide Führungen 36, 38 gewährleisten die Beibehaltung des Ölspaltes 32 bei den Kolbenbewegungen und sind zusätzlich jeweils mit einer Dichtungsanordnung 40 versehen, so dass zusammen mit einer Ölfüllung des Ölspaltes 32 nicht nur eine Kolbenschmierung, sondern auch ein Hochdruck-Dichtsystem gebildet ist. Um das bei Kolbenbewegungen veränderliche Volumen des Ölspaltes 32 zu kompensieren, ist am Ölspalt 32 ein Hydrospeicher 42 angeschlossen, der beim Ausfahren des Kolbens 26 verdrängtes Öl aufnimmt und beim Einfahren des Kolbens 26 wieder abgibt.

Wie erwähnt, befindet sich in Fig. 3 der Kolben 26 in einer mittleren Position, bei der die Lastmasse 4 teilweise abgesenkt ist. Wird die Lastmasse 4 vollständig abgesenkt, bewegt sich der Kolben 26 in Richtung auf den Boden 24 des Topfes 22, so dass das Kolbenende 28 in der Endlage der Absenkbewegung dem Boden 24 angenähert ist. Beim Einfahren des Kolbens 26 wird das Arbeitsgas auf ein Volumen verdichtet, das bei der voll eingefahrenen Position dem Volumen des Hohlraumes 30 des Kolbens 26 entspricht. Dadurch wird die beim Absenken abgegebene Lageenergie der Lastmasse 4 in Druckenergie im Speicherzylinder 16 umgesetzt. Die voll eingefahrene Position des Kolbens 26 entspricht dem Zustand der stärksten Verdichtung und damit der stärksten Erwärmung des Arbeitsgases. Gleichzeitig ist bei diesem Betriebszustand das erwärmte Arbeitsgas doppelwandig eingeschlossen, weil sich die Kolbenwand 44 bei dieser Position über die Gesamtlänge des Topfes 22 entlang der Topfwand 46 erstreckt. Hinzu kommt, dass das im Ölspalt 32 gekammerte Medium, das sich praktisch über die Gesamtlänge des Topfes 22 erstreckt, eine zusätzliche Isolationsschicht zwischen Topfwand 46 und Kolbenwand 44 bildet.

Beim Zustand der stärksten Erwärmung ist daher der Speicherzylinder 26 gleichzeitig im Zustand der besten Wärmeisolation. Andererseits befindet sich bei der voll ausgefahrenen Position des Kolbens 26, also einem Zustand, bei dem aufgrund der Expansion sich das Arbeitsgas in dem am stärksten abgekühlten Zustand befindet, der Kolben 26 mit nahezu der gesamten Länge seiner Kolbenwand 44 außerhalb des Topfes 22, d.h., während des "unterkühlten" Betriebszustandes bietet der Speicherzylinder 16 den Größtwert der zur Umgebung freiliegenden Wandfläche, nämlich der im Wesentlichen gesamten Fläche der Topfwand 46 und der Kolbenwand 44, so dass relativ viel Wärmemenge aus der Umgebungsluft aufgenommen werden kann. Durch die geringe Wärmeabgabe bei "überhitztem" und die hohe Wärmeaufnahme bei "unterkühltem" Zustand des Arbeitsgases liegt daher insgesamt eine gute Energiebilanz vor.

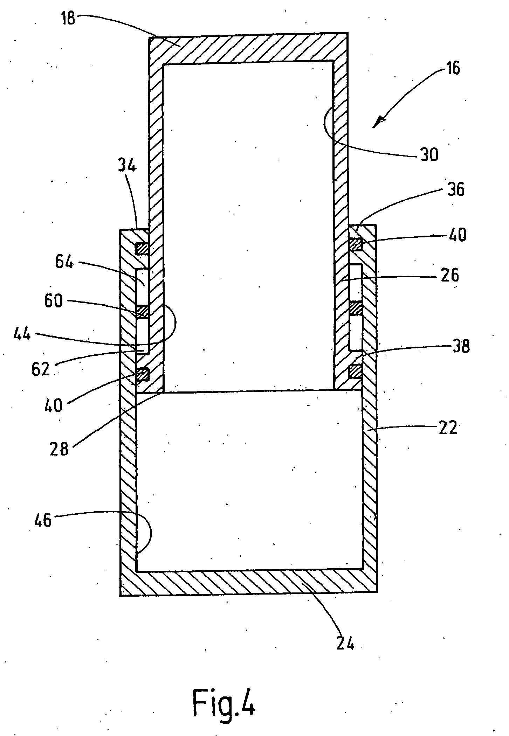

Die Fig. 4 zeigt ein Ausführungsbeispiel, das gegenüber Fig. 3 insofern vereinfacht ist, als kein am Ölspalt 32 vorgesehener Hydrospeicher vorhanden ist. Stattdessen enthält der Ölspalt 32 keine vollständige Ölfüllung, sondern ist durch eine schwimmende, also axial bewegbare Dichtung 60 in eine eine Ölfüllung enthaltende Ölseite 62 und eine mit Stickstoff gefüllte Gasseite 64 unterteilt. Bei den Bewegungen des Kolbens 26 bildet der Ölspalt somit eine Art miniaturisierten Hydrospeicher.

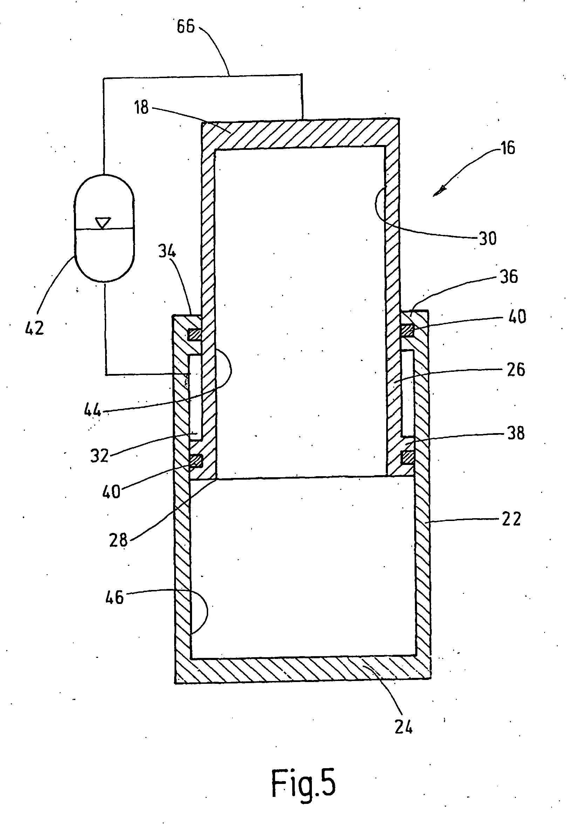

Fig. 5 zeigt ein weiter abgewandeltes Beispiel, bei dem, bei am Ölspalt 32 angeschlossenem Hydrospeicher 42, dessen Gasseite über eine Ladeleitung 66 mit dem Innenraum des Kolbens 26 verbunden ist, so dass der Fülldruck des Speichers 42 selbsttätig auf dem Druckniveau des Arbeitszylinders 16 gehalten ist. In der Ladeleitung 66 können, was nicht dargestellt ist, Druckbegrenzungs- und/oder Rückschlagventile vorhanden sein, um den Fülldruck des Hydrospeichers 42, wenn es gewünscht ist, vorzugeben oder in eine Richtung zu lenken. In Abänderung dieser Lösung kann es auch vorteilhaft sein, die Leitung 66 am Boden 24 des Speicherzylinders 16 anzuschließen und nicht im Bereich der oberen, kopfseitigen Abdeckung der Kolbenstange 18, so dass eine direkte fluidführende Verbindung zwischen dem Inneren des Arbeitszylinders 16 und dem Speicher 42 gegeben ist und zwar auf der Seite des Speichers 42, die der Auslassstelle der Leitung, die zum Raum 32 führt, gegenüberliegt.

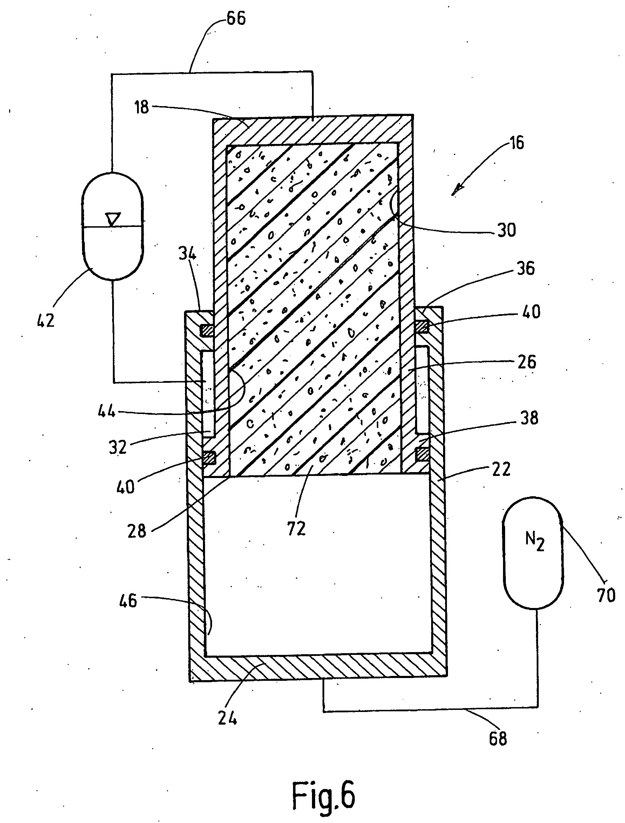

Fig. 6 zeigt eine weitere Variante, bei der der Innenraum des Speicherzylinders 6 über eine Versorgungsleitung 68 mit einer Versorgungsquelle 70 für Arbeitsgas verbunden ist. Außerdem ist zur weiteren Verbesserung der Wärmeisolation der innere Hohlraum 30 des Kolbens 26 mit einem großporigen Schaummaterial 72 zur Gänze gefüllt, der partiell auch das Arbeitsgas aufnehmen kann.

Es sei bemerkt, dass bei den stark schematisch vereinfachten Darstellungen der Fig. 3 bis 6, die lediglich das Funktionsprinzip verdeutlichen, konstruktive Einzelheiten weggelassen sind, beispielsweise eine geteilte Gestaltung des den Einbau des Kolbens 26 ermöglichenden offenen Endes 34 des Topfes 22 oder Anschlüsse für das Einbringen der Medien in den Ölspalt 32.

## Patentansprüche

1. Vorrichtung zur Rückgewinnung von Energie bei Arbeitsmaschinen, mit mindestens einem Kraftantrieb (6), der zum Bewegen einer Lastmasse (4) im Hingang und Hergang betätigbar ist, und mit einem Energiespeicher (16), der beim Bewegen der Lastmasse (4) in der einen Richtung abgegebene Energie aufnimmt und für eine nachfolgende Bewegung in der anderen Richtung zur Verfügung stellt, wobei ein Energiespeicher in Form eines Speicherzylinders (16) vorgesehen ist, der, mit der Lastmasse (4) mechanisch gekoppelt, bei Bewegung in der einen Richtung pneumatische Druckenergie speichert und bei Bewegung in der anderen Richtung als den Kraftantrieb (6) unterstützender, die gespeicherte Druckenergie in Antriebskraft umsetzender Hilfs-Arbeitszylinder wirkt, und wobei die Kolbenstange (18) des Speicherzylinders (16) mit einem hohlen, endseitig offenen Teil den Kolben (26) bildet, **dadurch gekennzeichnet, dass** der innere Hohlraum (30) des Kolbens (26) mit einem Schaummaterial (72) gefüllt ist.

2. Vorrichtung nach Anspruch 1, **dadurch gekennzeichnet, dass** der Speicherzylinder (16) als Hilfs-Arbeitszylinder mit einer anzuhebenden und abzusenkenden Lastmasse (4) gekoppelt ist und bei Absenkvorgängen abgegebene Lageenergie in Form pneumatischer Druckenergie speichert.

3. Vorrichtung nach Anspruch 1 oder 2, **dadurch gekennzeichnet, dass** der Hohlraum (30) des Kolbens (26) in der in den Zylinder (16) voll eingefahrenen Position im Wesentlichen das gesamte Volumen des Arbeitsgases enthält.

4. Vorrichtung nach einem der vorstehenden Ansprüche, **dadurch gekennzeichnet, dass** der Speicherzylinder (16) die Form eines Topfes (22) hat, an dessen geschlossenem Boden (24) ein Füllanschluss für das Arbeitsgas, wie N₂, vorgesehen ist.

5. Vorrichtung nach einem der vorstehenden Ansprüche, **dadurch gekennzeichnet, dass** an dem offenen Ende (34) des Speicherzylinders (16) eine Führung (36) gebildet ist, die die Außenseite des Kolbens (26) in einem einen Ölspalt (32) bildenden Abstand von der Innenwand (46) des Topfes (22) führt.

6. Vorrichtung nach einem der vorstehenden Ansprüche, **dadurch gekennzeichnet, dass** am offenen Ende (28) des Kolbens (26) eine zweite Führung (38) gebildet ist, die das Ende (28) des Kolbens (26) unter Beibehaltung des Ölspaltes (32) führt.

7. Vorrichtung nach einem der vorstehenden Ansprüche, **dadurch gekennzeichnet, dass** beide Führungen (36, 38) zusammen mit einer im Ölspalt (32) befindlichen Ölfüllung ein Hochdruck-Dichtsystem bilden.

8. Vorrichtung nach einem der vorstehenden Ansprüche, **dadurch gekennzeichnet, dass** mit dem Ölspalt (32) ein Hydrospeicher (42) in Verbindung ist, der bei Bewegungen des Kolbens (26) Änderungen des Volumens der Ölfüllung im Ölspalt (32) kompensiert.

9. Vorrichtung nach einem der vorstehenden Ansprüche, **dadurch gekennzeichnet, dass** der Speicherzylinder (16) als Hilfs-Arbeitszylinder einem als Kraftantrieb dienenden, durch ein Hydrauliksystem (10) betätigbaren hydraulischen Arbeitszylinder (6) mechanisch nebengeschaltet ist.

## Claims

1. A device for recovering energy in working machines, with at least one power drive (6) which can be actuated to move a load (4) mass back and forth, and with an energy storage system (16) which absorbs the energy released in the movement of the load mass (4) in one direction and makes it available for subsequent movement in the other direction, an energy storage system being provided in the form of an accumulator cylinder (16) which, mechanically coupled to the load mass (4), stores pneumatic pressure energy for movement in one direction, and for movement in the other direction acts as an auxiliary working cylinder which supports the power drive (6) and which converts the stored pressure energy into driving force, and the piston rod (18) of the accumulator cylinder (16) forming the piston (26) with a hollow part that is open at the end, **characterised in that** the inner cavity (30) of the piston (26) is filled with a foam material (72).

2. The device according to Claim 1, **characterised in that** the accumulator cylinder (16) as the auxiliary working cylinder is coupled to a load mass (4) which is to be raised and lowered and stores potential energy released in lowering processes in the form of pneumatic pressure energy.

3. The device according to Claim 1 or 2, **characterised in that** the cavity (30) of the piston (26) in the position fully retracted into the cylinder (16) contains essentially the entire volume of the working gas.

4. The device according to any of the preceding claims, **characterised in that** the accumulator cylinder (16) is formed in the shape of a cup (22) on the closed bottom (24) of which there is a filler port for the working gas, such as N₂.

5. The device according to any of the preceding claims, **characterised in that** on the open end (34) of the accumulator cylinder (16) a guide (36) is formed which guides the outside of the piston (26) a distance away from the inner wall (46) of the cup (22), which distance forms an oil gap (32).

6. The device according to any of the preceding claims, **characterised in that** on the open end (28) of the piston (26) a second guide (38) is formed which guides the end (28) of the piston (26) while maintaining the oil gap (32).

7. The device according to any of the preceding claims, **characterised in that** the two guides (36, 38), together with an oil charge located in the oil gap (32), form a high pressure sealing system.

8. The device according to any of the preceding claims, **characterised in that** a hydraulic accumulator (42) is connected to the oil gap (32) and compensates for changes of the volume of the oil charge in the oil gap (32) when the piston (26) moves.

9. The device according to any of the preceding claims, **characterised in that** the accumulator cylinder (16), as an auxiliary working cylinder, is mechanically shunted to a hydraulic working cylinder (6) which can be actuated by a hydraulic system (10) and which is used as a power drive.

## Revendications

1. Dispositif de récupération d'énergie dans des machines fournissant du travail, comprenant au moins un entraînement (6) mécanique, qui peut être actionné pour faire aller et venir une masse (4) de charge, et comprenant un accumulateur (16) d'énergie, qui, lors du déplacement de la masse (4) de charge dans un sens, absorbe de l'énergie cédée et, pendant un mouvement suivant dans l'autre sens, en met à disposition, dans lequel un accumulateur d'énergie est prévu sous la forme d'un vérin (16) accumulateur, qui, couplé mécaniquement à la masse (4) de charge, accumule, lors du déplacement dans le un sens, de l'énergie de pression pneumatique et, dans le déplacement dans l'autre sens, agit en tant que vérin de travail auxiliaire venant à l'appui de l'entraînement (6) mécanique et transformant l'énergie de pression accumulée en force d'entraînement, la tige (18) de piston du vérin (16) accumulateur ayant une partie creuse ouverte du côté de l'extrémité formant le piston (16), **caractérisé en ce que** l'espace (30) creux intérieur du piston (26) est rempli d'une matière (72) alvéolaire.

2. Dispositif suivant la revendication 1, **caractérisé en ce que** le vérin (16) accumulateur est, en tant que vérin de travail auxiliaire, accouplé à une masse (4) de charge à soulever et à abaisser, accumule sous forme d'énergie de pression pneumatique de l'énergie potentielle cédée lors d'opérations d'abaissement.

3. Dispositif suivant la revendication 1 ou 2, **caractérisé en ce que** l'espace (30) creux du piston (26) contient, dans la position rentrée complètement dans le vérin (16), sensiblement tout le volume du gaz de travail.

4. Dispositif suivant l'une des revendications précédentes, **caractérisé en ce que** le vérin (16) accumulateur au fond (24) fermé duquel est prévu un raccord de remplissage pour le gaz de travail, comme N₂, a la forme d'un pot (22).

5. Dispositif suivant l'une des revendications précédentes, **caractérisé en ce que**, à l'extrémité (34) ouverte du vérin (16) accumulateur, est formé un guidage (36), qui guide le côté extérieur du piston (26) à une distance, formant un intervalle (22) pour de l'huile, de la paroi (46) intérieure du pot (22).

6. Dispositif suivant l'une des revendications précédentes, **caractérisé en ce que**, à l'extrémité (28) ouverte du piston (26), est formé un deuxième guidage (38), qui guide l'extrémité (28) du piston (26) en conservant l'intervalle (32) pour de l'huile.

7. Dispositif suivant l'une des revendications précédentes, **caractérisé en ce que** les deux guidages (36, 38) forment ensemble avec un remplissage d'huile se trouvant dans l'intervalle (32) pour de l'huile un système d'étanchéité de haute pression.

8. Dispositif suivant l'une des revendications précédentes, **caractérisé en ce que**, avec l'intervalle (32) pour de l'huile est en liaison un accumulateur (42) hydraulique, qui, lors des déplacements du piston (26), compense des modifications du volume du remplissage d'huile dans l'intervalle (32) pour de l'huile.

9. Dispositif suivant l'une des revendications précédentes, **caractérisé en ce que** le vérin (16) accumulateur est, en tant que cylindre de travail auxiliaire, monté mécaniquement à côté d'un vérin (6) hydraulique de travail servant d'entraînement mécanique et pouvant être actionné par un système (10) hydraulique.
